# EUROPÄISCHE PATENTANMELDUNG

(11) **EP 0 603 572 A1**
(43) Veröffentlichungstag der Anmeldung: **29.06.1994**
(21) Anmeldenummer: 93118952.6
(22) Anmeldetag: 25.11.1993
(51) Int. Cl.: B44C 1/22, C03C 15/00, G09F 3/10

(54) **Trägerelement zum Anbringen eines Codes in oder an einer Glasscheibe zur Sicherheitscodierung von Kraftfahrzeugen**

(30) Priorität: 24.12.1992 DE 9217655 U
(71) Anmelder: Gnoyke, Horst, D-22850 Norderstedt (DE)
(72) Erfinder: Ristau,Harald, D-21077 Hamburg (DE)

(57) **Zusammenfassung**

Das Trägerelement dient zum Anbringen eines Bild-, Buchstaben- und/oder Zahlen-Codes (13) in oder an einer Glasscheibe zur Sicherheitscodierung von Kraftfahrzeugen und besteht aus einer Schablone (10), die vorgestanzte, vorgeritzte oder vorgeschnittene Durchbrechungen (13), vorzugsweise Buchstaben und/oder Zahlen, aufweist und auf ihrer Rückseite mit einer selbstklebenden Beschichtung (11) versehen ist, mit der die Schablone (10) lösbar auf einem temporären Träger (12') aus Papier, Pappe, Kunststoff oder Glas fixierbar ist.

## Beschreibung

Die Erfindung betrifft ein Trägerelement zum Anbringen eines Bild-, Buchstaben- und/oder Zahlencodes in oder an einer Glasscheibe, zur Sicherheitscodierung von Kraftwagen.

Gegen das unerlaubte Entwenden von Kraftfahrzeugen sind für diese die verschiedensten Diebstahlsicherungen entwickelt worden. So ist u.a. zum Schutz gegen Diebstahl von Kraftfahrzeugen ein fälschungssicheres System bekannt, nach dem in jede Scheibe eines Kraftfahrzeuges identische, weithin sichtbare alphanumerische Zahlenfolgen (Code-Nummern) fälschungssicher eingeätzt werden. Auf diese Weise wird ein fälschungssicherer Diebstahlschutz für Kraftfahrzeuge geschaffen, wobei die in die Glasscheiben eingeätzten Code-Nummern fester Bestandteil des Kraftfahrzeuges und nicht entfernbar sind, denn bei einem Diebstahl eines so gesicherten Kraftfahrzeuges müßten die Täter zusätzlich zum Umfrisieren von Fahrgestellnummer, Motornummer und Nummernschild auch alle Scheiben austauschen, wodurch die Kosten des Umfrisierens wesentlich erhöht werden; hinzu kommt, daß der Kauf eines kompletten Scheibensatzes ungewöhnlich ist, auffällt und das Risiko, entdeckt zu werden, gesteigert wird.

Die ständig wachsende Zahl von Kraftfahrzeugdiebstählen hat daher zu verstärkten Bemühungen geführt, sofort erkennbare Codierungen in die Scheiben einzuätzen. Diese Codierungen bestehen aus Buchstaben- und/oder Zahlenkolonnen, mit denen ein Kraftfahrzeug leicht identifiziert werden kann. Eine der sichersten Methoden, um die Codierung schnell und ohne großen Arbeitsaufwand auf möglichst vielen Scheiben anbringen zu können, ist mit dem Ätzen gegeben. Um auch hier konturengenau arbeiten zu können, empfiehlt sich die Verwendung von Schablonen.

Nachteilig ist jedoch, daß zum Anbringen der Code-Nummern auf dem Glas der Scheiben handelsübliche Ätzflüssigkeiten oder Ätzpasten auf der Basis von Flußsäure verwendet werden müssen, um die Code-Nummern in das Glas einätzen zu können. Nach Beendigung des Ätzvorganges muß überschüssige Ätzflüssigkeit oder Ätzpaste entfernt und durch Neutralisation entsorgt werden. Die Entsorgung ist aufwendig und mit zusätzlichen Kosten verbunden.

Es ist daher Aufgabe der Erfindung, einen an den Glasscheiben der Fenster von Kraftfahrzeugen vermittels einer Schablone anzubringenden Diebstahlschutz in Form von sichtbaren und leicht erkennbaren alphanumerischen Ziffern- und/oder Buchstabenfolgen (Code-Nummern) zu schaffen, bei dem das Anbringen der Code-Nummern in oder an die Glasscheiben vereinfacht wird, und eine fälschungssichere Anbringung der Code-Nummern an den Glasscheiben durch jedermann ohne Hinzuziehung von Fachkräften oder Einschaltung von Kraftfahrzeugwerkstätten möglich ist, wobei die für das Einätzen der Code-Nummern in eine Glasscheibe verwendete Schablone leicht handhabbar ist. Insbesondere soll diese Schablone auch von Nichtfachleuten zum Einätzen von Code-Nummern in die Glasscheiben von Kraftfahrzeugen verwendet werden können. Außerdem soll eine konturengenaue Übertragung der Code-Nummern auf die Glasscheibe erreicht werden.

Diese Aufgabe wird durch die im Anspruch 1 gekennzeichneten Merkmale gelöst.

Hiernach besteht die Erfindung darin, daß die eingesetzte Schablone vorgestanzte, vorgeritzte oder vorgeschnittene, vorzugsweise vermittels Laserstrahlen erzeugte Durchbrechungen, vorzugsweise Buchstaben und/oder Zahlen, aufweist und auf ihrer Rückseite mit einer selbstklebenden Beschichtung versehen ist, mit der die Schablone lösbar auf einem temporären Träger aus Papier, Pappe, Kunststoff oder Glas fixierbar ist. Die Möglichkeit der temporären Haft-Fixierung setzt den Benutzer in die Lage, die Schablone auf dem Kraftfahrzeugscheibenglas zu befestigen und in den Bereich der Durchbrechungen Ätzflüssigkeit aufzutragen. Hiernach kann die Schablone wieder entfernt und an anderer Stelle eingesetzt werden. Ein konturengenaues Übertragen der Code-Ziffern durch Ätzung ist in dieser Schablone erreichbar.

Vorteilhafte Ausgestaltungen der Erfindung sind in den Unteransprüchen gekennzeichnet.

So kann der Träger, der vorzugsweise aus Papier, Pappe oder Kunststoff besteht, ein die Rückseite der Schablone vollständig abdeckendes Schutzblatt sein, womit vermieden wird, daß sich Staub oder andere unerwünschte Substanzen auf der Klebebeschichtung festsetzen, wenn die Schablone nicht benötigt wird.

Weiterhin vorzugsweise ist die Schablone und/oder das Schutzblatt flexibel ausgebildet, so daß die Schablone leicht abgezogen werden kann. Weiterhin ragt das Schutzblatt an mindestens einer Seite über den Schablonenrand hinaus oder besitzt eine Abziehlasche, womit die Handhabbarkeit der Schablone verbessert wird.

Nach einer weiteren Ausgestaltung der Erfindung bestehen die Durchbrechungen aus geschlossenen Kurven und/oder Linien, die eine ebenfalls geschlossene Fläche begrenzen. Vorzugsweise sind die Durchbrechungen und die Flächen derart vorbereitet, daß beim Abziehen der Schablone vom Träger die Flächen auf dem Träger (als erhabene Ausgestaltung) haften bleiben, wohingegen die Schablone selbst die entsprechenden Durchbrechungen, insbesondere in Form von Buchstaben- oder Zahlenfolgen, enthält, wodurch ein konturengenaues Abbilden der Code-Ziffern möglich ist. Der besondere Vorteil besteht darin, daß die die Code-Nummern bildenden Durchbrechungen erst vor Gebrauch durch Abziehen des Trägers gebildet werden, so daß nicht nur ein konturengenaues Abbilden der Code-Nummern oder Code-Ziffern möglich ist, sondern auch die Code-Ziffern mit kleinsten Abmessungen ohne ein Ineinanderlaufen der Konturen oder Ränder der Durchbrechungen konturenscharf wiedergegeben werden können. Hinzu kommt, daß durch die Schaffung der Durchbrechungen vor dem Ätzvorgang scharfe Randkonturen und plan an der Glasscheibe anliegende Randbereiche der Durchbrechungen erhalten werden, so daß ein Einfließen der Ätzpaste in den Randbereichen vermieden wird.

Um ein unbeabsichtigtes Abziehen der Trägerfolie von der Schablone zu verhindern, ist die Schablone in dem Verschlußstreifen eines Beutels angeordnet, so daß sie bis zu ihrer bestimmungsgemäßen Verwendung geschützt ist. Nach einer weiteren Ausgestaltung der Erfindung enthält der Beutel Kalk, der zur Neutralisation der überschüssigen Ätzflüssigkeit oder Ätzpaste benötigt wird. Alle mit der Ätzpaste behafteten Gegenstände können nach Abschluß der Codierung in den Beutel (als Entsorgungstüte) gegeben und durch Umschütteln neutralisiert werden.

Nach einer weiteren Ausführungsform der Erfindung ist die Schablone in einem Karton verpackt, auf dessen einer Wandung eine Glasplatte aufgeklebt ist. Diese Glasplatte kann zum Einüben der Ätzung unter Benutzung der Schablone verwendet werden, damit auch der Nichtfachmann die notwendige Fertigkeit im Umgang mit der Schablone bzw. der Ätzflüssigkeit erhält. Zweckmäßigerweise weist die Kartonverpackung zusätzlich Handschuhe und eine Flasche oder Dose mit Ätzflüssigkeit oder -paste auf, also ein vollständiges Ätz-Bearbeitungsset. Um die Ätzflüssigkeit oder -paste besser verteilen zu können, weist die Verpackung zusätzlich einen Spatel aus Holz oder Kunststoff und die bereits vorerwähnte Entsorgungstüte mit Kalk auf. Etwa einliegende Reinigungs- oder Trockentücher sowie Wachsentferner können zur Vorreinigung der zu behandelnden Scheibe verwendet werden. Um die in die Glasscheiben einzubringende Code-nummer zu registrieren, ist in dem Karton zusätzlich eine Ausweishülle mit entsprechenden vorbereiteten Formularpapieren vorgesehen. Der Karton kann auch Facheinteilungen oder Halterungen im Boden und/oder Deckelteil besitzen, mit denen die genannten Teile dicht gepackt und übersichtlich eingelegt werden können.

Eine weitere Lösung der Aufgabe besteht darin, die Schablone als ein die Code-Nummer tragendes Plättchen aus Metall oder Kunststoff auszubilden und unter Ausbildung eines festen Haftfilmes hoher Stabilität gegenüber Abscher- und Zugkräften vermittels eines Klebstoffes auf einer Glasscheibe eines Fahrzeuges zu befestigen. Dabei kann das Plättchen schablonenartig ausgebildet und mit Code-Nummern versehen sein, die noch zusätzlich in die Glasscheibe einätzbar ist, so daß auch bei einem Entfernen des Plättchens von der Glasscheibe die Code-Nummer noch zusätzlich in der Glasscheibe verbleibt. Den Fahrzeugbesitzern werden auf diese Weise drei Alternativen angeboten, nämlich
- das mit einer Code-Nummer versehene, als Schablone ausgebildete Plättchen auf einer Glasscheibe zu befestigen, oder
- mittels des schablonenartigen Plättchens, die in diesem vorgesehene Code-Nummer in die Glasscheibe zu ätzen, oder
- das schablonenartige Plättchen mit der Code-Nummer auf eine Glasscheibe aufzukleben und zusätzlich die Code-Nummer in die Glasscheibe einzuätzen.

Es wird somit ein Diebstahlschutz für Kraftfahrzeuge durch auf den Glasscheiben von Kraftfahrzeugen aufgebrachten Plättchen aus Metall oder Kunststoff erhalten, die fälschungssicher Code-Nummern tragen, die in Form von Durchbrechungen in das Plättchen eingelassen sind, um ein nachträgliches Verändern einzelner Ziffern oder Buchstaben der Code-Nummer zu verhindern. Das Einlassen der Code-Nummern in das Plättchen kann z.B. mittels eines Laserstrahles erfolgen. Das Plättchen, das bevorzugterweise aus hochpoliertem Stahl besteht und sehr dünnwandig ist, ist mittels einer Klebeverbindung unlösbar mit dem Glas der Fensterscheibe verbunden. Als Klebeverbindung kommen solche Klebstoffe zur Anwendung, die einen festen Haftfilm ausbilden und eine hohe Stabilität gegenüber Abscher- und Zugkräften aufweisen. Ein Entfernen des aufgeklebten Plättchens ist nur unter Zerstörung der Glasscheibe oder bei Hinterlassung von sichtbaren Spuren auf der Glasoberfläche möglich. Dadurch, daß das verwendete Plättchen sehr dünnwandig ist, ist ein gewaltsames Abheben des Metallplättchens von der Glasscheibe z.B. mittels eines Spatels oder eines Schraubendrehers nicht möglich, da ein Einschieben des Abhebeinstruments zwischen das Plättchen und die Glasscheibe nicht möglich ist. Laufen die Randbereiche des Plättchens auch noch konisch sich verjüngend aus, so ist ein stufenloser Übergang zur Glasscheibe gegeben; ein Entfernen des Plättchens von der Glasscheibe ist dann erst recht nicht möglich.

Als Klebstoffe kommen solche Klebstoffe zur Anwendung, die zum Verkleben von Glas mit Metall geeignet sind.

Neben Festklebern können Kontaktkleber oder Zweikomponentenkleber verwendet werden; auch solche, die nach

Anwendung eines kurzen und hohen Druckes eine Haftung bewirken. Kontaktkleber auf der Basis von PUR, SB, Polychloropren oder Reaktionskleber auf der Basis von EP+Säureanhydriden, Methacrylaten u.dgl. können eingesetzt werden. Das auf die Glasscheibe aufgeklebte Plättchen mit der Code-Nummer wird fester Bestandteil des Kraftfahrzeuges und ist nicht mehr entfernbar. Ein derart erfindungsgemäß sicherheitscodiertes Fahrzeug zu stehlen und umzufrisieren ist mit dem hohen Risiko des Entdeckens verbunden. Auch das Wiederauffinden von gestohlenen Fahrzeugen wird durch diesen Diebstahlschutz

erleichtert. Ausführungsbeispiele der Erfindung werden nachstehend anhand der Zeichnungen näher erläutert. Es zeigen
Fig. 1 ein als Schablone ausgebildetes Trägerelement mit abziehbarem Schutzblatt in einer perspektivischen Ansicht,
Fig. 2 eine Explosionsdarstellung der Teile nach Fig.1,
Fig. 3 einen Schablonenabschnitt mit vorgefertigten Durchbrechungen bei anhaftendem Schutzblatt,
Fig. 4 den Schablonenabschnitt nach Abziehen des Schutzblattes,
Fig. 5 das Schutzblatt nach dem Abziehen,
Fig. 6 das Trägerelement, angeordnet an dem Verschlußstreifen eines die Materialien zum Einätzen der Code-Nummern in die Glasscheibe aufnehmenden Beutels,

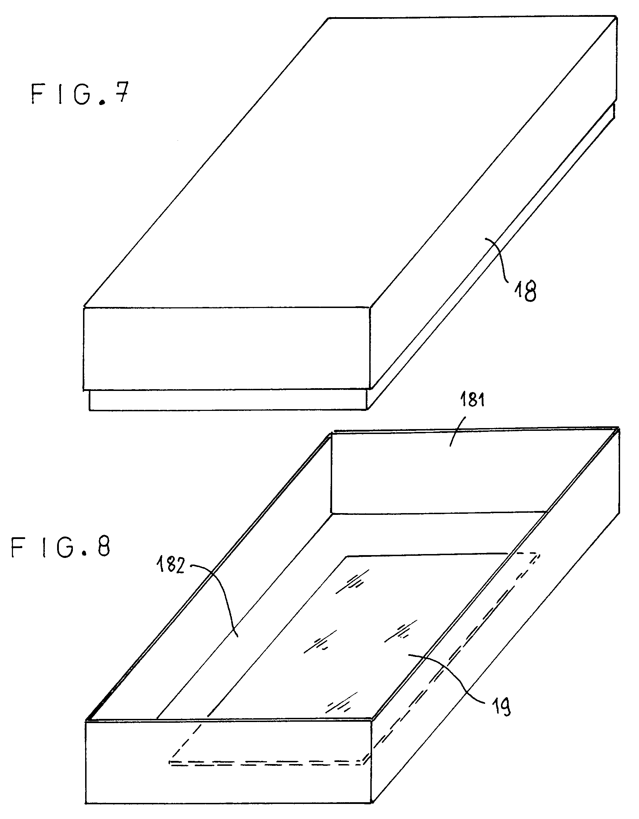

Fig. 7 eine Kartonverpackung für das Trägerelement sowie weitere Hilfsmittel,
Fig. 8 die Innenseite des Deckelteils des Kartons nach Fig. 7,
Fig. 9 in einer schaubildlichen Ansicht einen die Materialien zum Einätzen der Code-Nummern in eine Glasscheibe aufnehmenden Beutel, mit einem in dessen Innenraum angeordneten Kartonzuschnitt, der an seinem aus dem Beutel herausgeführten Ende die Schablone trägt,
Fig. 10 den Beutel mit der Trägerplatte für die Schablone gemäß Fig. 9 in einer Explosionsdarstellung;
Fig. 11 den Beutel gemäß Fig. 9 in einer Seitenansicht,
Fig. 12 in einer schaubildlichen Ansicht eine weitere Ausführungsform des Beutels mit abtrennbarer Schablone und mit einer den Beutelinnenraum in zwei Kammern unterteilende, zerstörbare Trennwand,
Fig. 13 in einer schaubildlichen Ansicht eine Glasscheibe für das Fenster eines Kraftfahrzeuges mit einem auf der Glasscheibe angebrachten, eine Code-Nummer tragenden Plättchen als Trägerelement für die Code-Nummern,
Fig. 14 in einer Draufsicht einen vergrößerten Abschnitt der Glasscheibe mit dem Plättchen,
Fig. 15 einen waagerechten Schnitt gemäß Linie XV-XV in Fig. 14,
Fig. 16 in einer schaubildlichen Ansicht eine Glasscheibe mit einem aufgeklebten Plättchen mit einer Farbbeschichtung, in der ein farbfreies Fenster für die Code-Nummer ausgebildet ist,
Fig. 17 einen waagerechten Schnitt gemäß Linie XVII-XVII in Fig. 16 durch eine Glasscheibe mit einem aufgeklebten Plättchen mit einer Code-Nummer und einer Farbbeschichtung,
Fig. 18 einen waagerechten Schnitt gemäß Linie XVII-XVII in Fig. 16 durch eine Glasscheibe mit einem aufgeklebten Plättchen mit einer Code-Nummer und einer Bildmotivbeschichtung,
Fig. 19 in einer Draufsicht eine Glasscheibe mit einem aufgeklebten Plättchen, das mit einer Bildmotivbeschichtung versehen ist,
Fig. 20 einen waagerechten Schnitt gemäß Linie XVII-XVII in Fig. 16 durch eine Glasscheibe mit einem aufgeklebten Plättchen mit einer Code-Nummer und einer holographischen Bildbeschichtung und
Fig. 21 einen waagerechten Schnitt durch eine doppelwandige Glasscheibe mit zwischen den beiden Glasscheiben angeordneten Plättchen mit einer Code-Nummer.

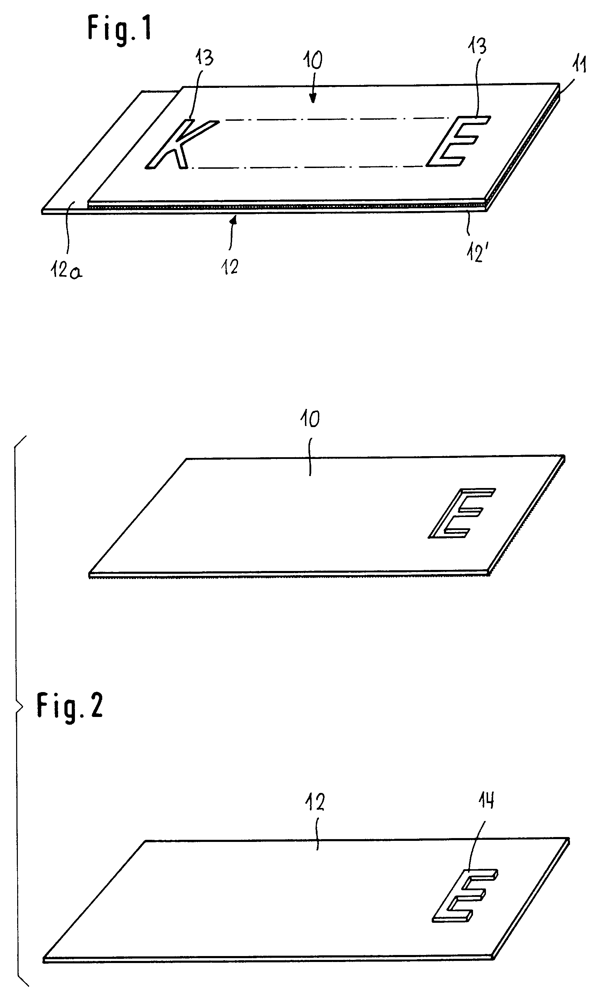

Nach Fig. 1 ist das Trägerelement als Schablone 10 ausgebildet, die auf ihrer Rückseite eine selbstklebende Beschichtung 11, mit der sie auf einem Träger 12' - einem Schutzblatt 12 - befestigt ist. Das Schutzblatt 12 deckt die Schablonenrückseite vollständig ab und ragt an einer Seite mit einem Laschenteil 120 hierüber hinaus. Die Schablone 10 enthält Durchbrechungen 13 - hier die Buchstaben K und E -, die durch Stanzen, Schneiden oder Ritzen, insbesondere durch Laserschneiden, vorgefertigt werden können.

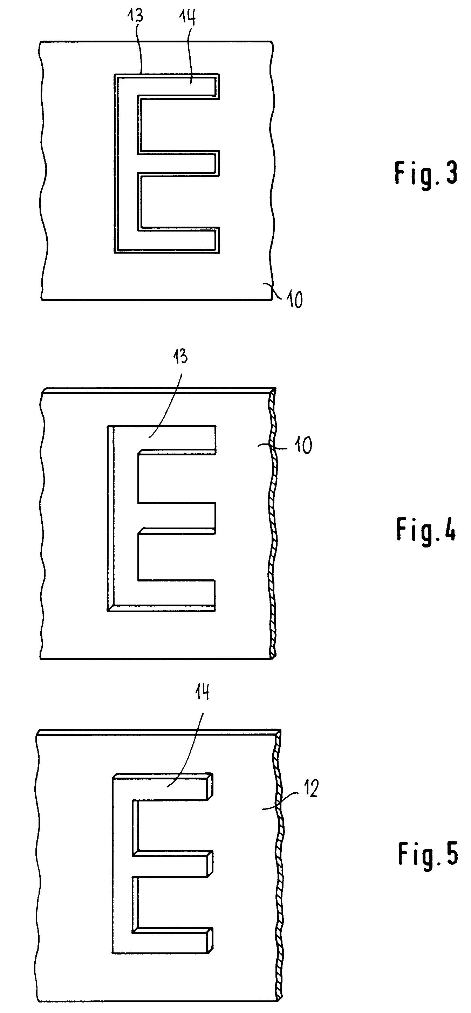

Wie aus Fig.3 ersichtlich, können die Durchbrechungen 13 derart gestaltet sein, daß sich eine Innen- und Außenkontur in Form von geschlossenen Linien ergibt, so daß eine Fläche 14 in Form eines Buchstabens oder einer Zahl vorgestanzt ist. Löst man den Träger 12' von dem Schutzblatt, so bleibt hierauf die geschlossene Fläche - beispielsweise der Buchstabe E - in Form einer Erhebung haften, während sich auf der Schablone der Buchstabe E als Durchbrechung darstellt. So stellt Fig. 4 den oberen Teil der Fig. 2, nämlich die Schablone 10 , in einer Teilausschnittvergrößerung nach Abziehen des Schutzblattes 12 dar, das in Fig. 5 ebenfalls in vergrößerter Darstellung sichtbar gemacht ist. Fig. 4 ist deutlich die Durchbrechung (Buchstabe E) 13 zu entnehmen, die als erhabene Fläche 14 auf dem Träger, nämlich Schutzblatt 12, liegt.

Die Schablone 10 kann auch als Plättchen aus Metall oder Kunststoff ausgebildet und auf der Glasscheibe mittels eines Haftklebers befestigt sein.

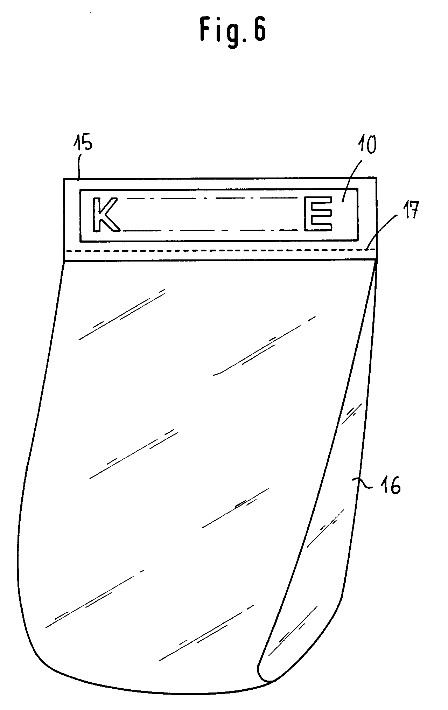

Nach Fig. 6 ist die Schablone 10 mit der Buchstaben-Zahlen-Kombination an dem Verschlußstreifen 15 eines Beutels 16 angeordnet, der als Entsorgungstüte dienen kann und gegebenenfalls Kalk enthält, durch den Ätzflüssigkeit oder Ätzpaste neutralisierbar ist. Der Verschlußstreifen 15 ist durch Auftrennen einer vorgestanzten Perforation 17 abtrennbar, wonach die Schablone 10 entnommen werden kann.

Der dargestellte Beutel 16 nach Fig.6, etwaige weitere Schablonen, die auch auf einem einzigen Träger angeordnet sein können, ein Paar Handschuhe, ein Wachsentferner, ein Reinigungs- oder Trockentuch sowie eine Ätzflüssigkeit oder -paste und ein Spachtel sind in einer quaderförmigen Kartonverpackung 18 angeordnet, dessen Deckelteil 181 auf der Innenseite eine Glasscheibe 19 besitzt, die dort befestigt ist. Diese Glasscheibe 19 dient dazu, daß der Benutzer mit einer Musterschablone erste Ätzversuche probeweise machen kann, bevor er sich an die Scheibe seines Kraftfahrzeuges wagt.

Der Vorteil der Verwendung der erfindungsgemäßen Schablone, gegebenenfalls unter Benutzung des beschriebenen Sets, liegt darin, daß das Einätzen einer beliebigen Buchstaben- und Zahlenkombination ( je nach Vorlage ) konturengenau erfolgt, wenn auf die auf die Scheibe eines Fahrzeuges aufgeklebte Schablone Ätzpaste aufgestrichen wird. Auf diese Weise ist es auch möglich, Buchstaben- und Zahlenkombinationen mit kleinen Abmessungen in die Fahrzeugscheibe einzuätzen. Das Anbringen der Kennzeichnung auf Scheiben aus Sicherheitsglas beeinträchtigt auch nicht dessen Bruchverhalten, da die Gesamtabmessung der durch Ätzung eingetrübten Fläche bevorzugterweise nicht länger als 55 mm und nicht höher als 15 mm ist. Die Einätztiefe ist äußerst gering; sie wird dadurch erreicht, daß die Schablone als dünnwandige Folie ausgebildet ist, ohne daß die Konturen der Buchstaben- und Zahlenkombinationen verwischt werden können, wenn die Ätzpaste auf die aufgeklebte Schablone gestrichen wird. Die Code-Nummer kann innerhalb kürzester Zeit auf einer Kfz-Scheibe, gegebenenfalls auch auf mehreren Scheiben, eingeätzt werden. Bevorzugte Positionen sind jeweils Ecken am unteren Scheibenrand. Die Anbringung sollte möglichst an trockenen Tagen bei Temperaturen oberhalb von 5^{o}C erfolgen. Der Abstand zwischen der unteren Kante der Kraftfahrzeugidentifikationsnummer (Code-Nummer) und der oberen Kante des Fenstergummis sollten in jedem Falle nicht unter 15 mm betragen, um Verätzungen des Fenstergummis zu vermeiden.

Zum Einätzen der Kennzeichnungsnummern werden die Ätzflächen sorgfältig mit den Reinigungstüchern bzw. dem Wachsentferner gesäubert. Anschließend wird die Schablone von dem Schutzblatt abgezogen und auf der Kfz-Scheibe an der vorgesehenen Position angeheftet. Hierbei ist darauf zu achten, daß die Schablone niemals über den Scheibenzulassungsstempel geklebt werden darf.

Zum Andrücken der Schablone wird ein Stück Papier darüber gelegt und die Schablone angedrückt.

Zum eigentlichen Ätzen wird nach Anziehen der Handschuhe, vorzugsweise Latex-Handschuhe, die Ätzdose geöffnet und die Ätzpaste mit einem Holzspachtel umgerührt und anschließend vorsichtig kreisförmig in ausreichender Menge auf die ausgesparten Schablonen-Nummern oder Buchstaben verteilt. Etwaige Pastenspritzer auf die Glasscheibe sind sofort mit Wasser zu entfernen, um unbeabsichtigte Verätzungen des Glases zu verhindern. Gegebenenfalls können nacheinander die vorhandenen Schablonen an mehreren Stellen angebracht und die Ätzpaste aufgetragen werden. Sind alle Schablonen mit Paste ausgefüllt, kann nach fünfzehn Minuten mit Hilfe des beigefügten Holzspachtels jede Schablone einzeln von der jeweiligen Scheibe abgehoben und von den Pastenresten mit Wasser und Schwamm befreit werden. Danach werden mit Papier oder Trockentüchern die Scheiben getrocknet. Die abgehobenen Schablonen können ebenso wie die offene Dose und der Spachtel in die Entsorgungstüte gelegt werden. Diese Entsorgungstüte enthält Kalk, dem ein halber Liter Wasser zugegeben wird. Nach Schließen der Entsorgungstüte und kurzem Schütteln wird die Ätzpaste, die im wesentlichen eine Säure enthält, durch die aus Kalk gebildete Lauge neutralisiert. Nach ca. einer Stunde kann die Entsorgungstüte ohne Bedenken in den (Haus-)Mülleimer geworfen werden. Etwaige Warnaufkleber an Fahrer- und Beifahrertür sind stets von innen hinter die Code-Nummer zu kleben, womit weithin die Codierung des Kraftfahrzeuges sichtbar gemacht werden kann.

Als Ätzpaste werden Produkte/Substanzen auf Flußsäurebasis oder reine Flußsäure oder andere geeignete Verbindungen verwendet, mit denen Glas anätzbar ist.

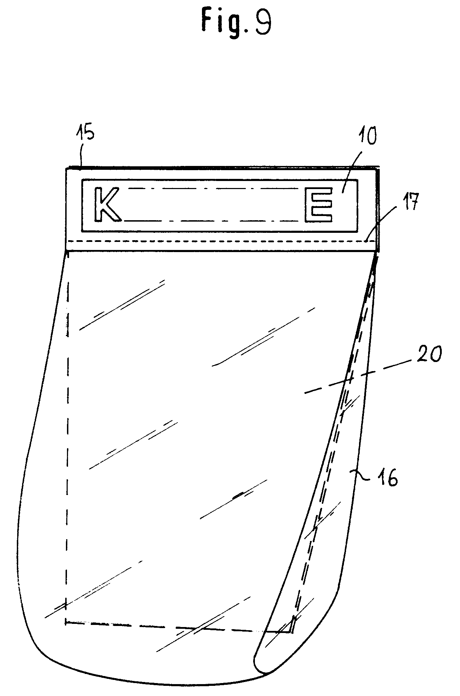

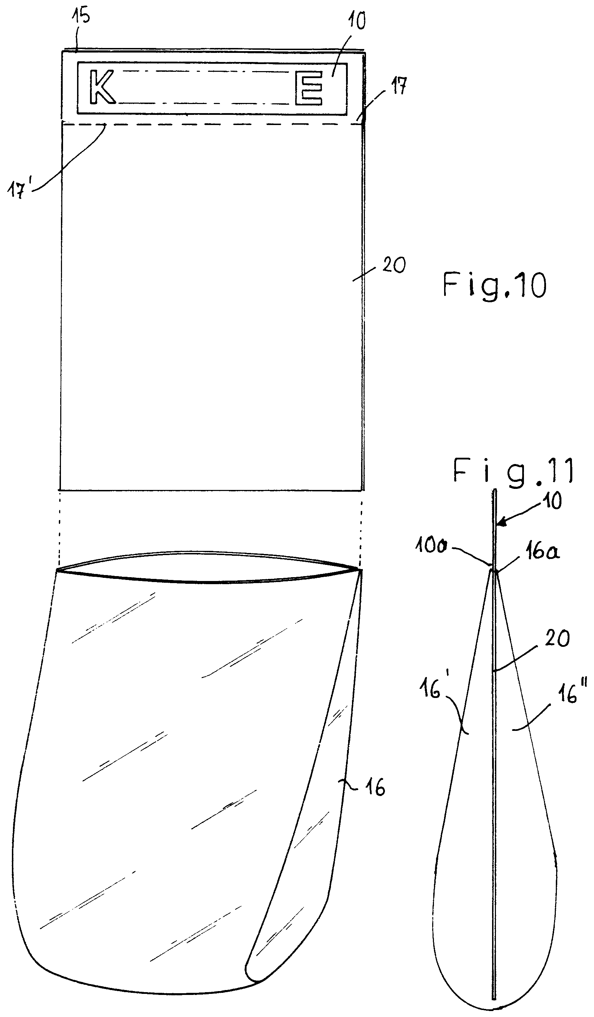

Nach einer weiteren Ausführungsform gemäß Fig. 9 bis 11 ist die Folienschablone 10 mit ihren Durchbrechungen 13 an einem Zuschnitt 20 aus Pappe, Karton oder einem anderen geeigneten Material befestigt, wobei die Schablone 10 fester Bestandteil des Kartonzuschnittes 20 oder lösbar vermittels einer Trennperforation mit diesem verbunden sein kann (Fig. 9). Dieser Kartonzuschnitt 20 dient bei einer festen Anordnung der Schablone 10 gleichzeitig als griffartige Handhabe beim Anbringen der Code-Nummern vermittels der Ätzpaste. Außerdem dient der Kartonzuschnitt 20 im Innenraum des Beutels 16 gleichzeitig als versteifendes und den Innenraum des Beutels 16 in zwei Kammern 16', 16'' unterteilendes Element, wobei dann in den beiden Kammern 16', 16'' die für das Anbringen der Code-Nummern an einer Glasscheibe erforderlichen Utensilien und Substanzen untergebracht sind (Fig. 10). Die Abmessungen des Kartonzuschnittes 20 entsprechen in etwa den Abmessungen des Beutels 16, so daß der obere umlaufende Rand 16a des Beutels 16 an der unteren Kante 10a der Schablone 10 befestigt ist. Die Trennperforation 17', vermittels der die Schablone 10 vom Kartonzuschnitt 20 abtrennbar ist, kann beim Abtrennen der Schablone 10 gleichzeitig ein Öffnen des Beutels 16 bewirken.

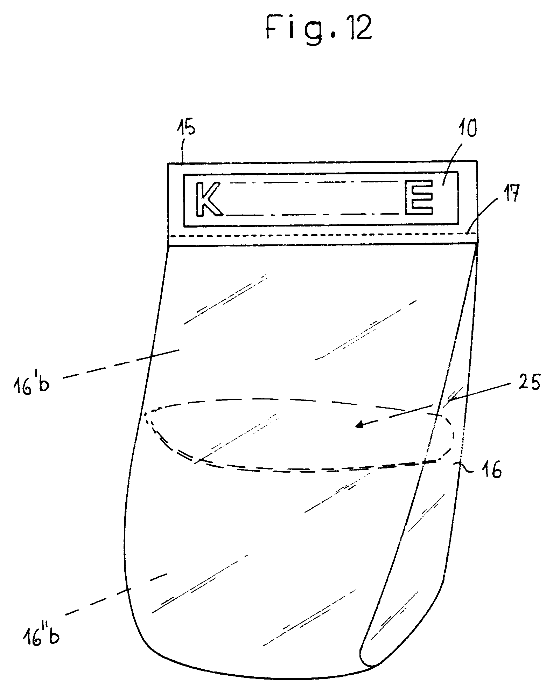

Nach Fig. 12 besteht die Möglichkeit, den Innenraum des Beutels 16 vermittels einer waagerecht verlaufenden Trennwand 25, zweckmäßigerweise aus einer leicht zerstörbaren oder heraustrennbaren Folie o.dgl., in eine obere Kammer 16'b und in eine untere Kammer 16''b zu unterteilen, wobei dann diese Kammern 16'b, 16''b die zum Anbringen der Code-Nummern an einer Glasscheibe erforderlichen Utensilien und Substanzen aufnehmen. Dabei ist es vorteilhaft, wenn in der unteren Kammer 16''b der zur Entsorgung von Ätzpastenresten erforderliche Kalk untergebracht ist, während in der oberen Kammer 16'b alle anderen Utensilien untergebracht sind. Nach der Entnahme dieser Utensilien und der Entfernung der Trennwand 25 kann dann der Beutel 16 mit dem darin vorhandenen Kalk als Entsorgungsbeutel Verwendung finden. Es besteht auch die Möglichkeit, den Beutel 16 in anderer Weise als durch obenseitiges Öffnen zu öffnen, indem nämlich Sollbruchstellen in Form von Aufreißflächen od.dgl. in mindestens einer der Beutelseitenwände vorgesehen sind.

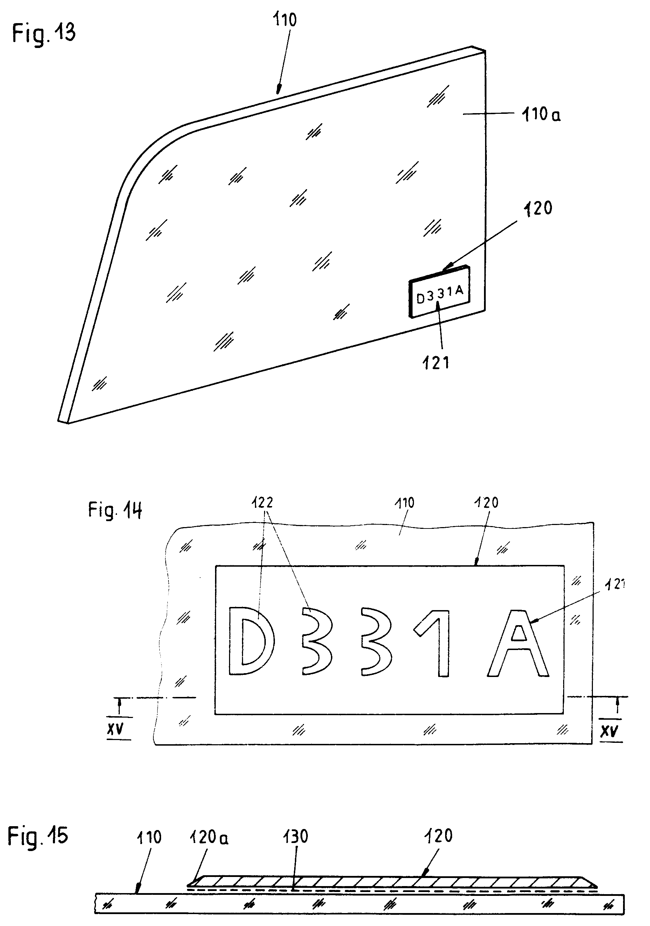

In den Fig. 13 bis 15 ist mit 110 eine handelsübliche Glasscheibe für das Fenser eines in der Zeichnung nicht dargestellten Kraftfahrzeuges bezeichnet. Auf ihrer Außenwandfläche 110a trägt die Glasscheibe 110 ein dünnwandiges Plättchen 120 als Trägerelement für die Code-Nummern aus Metall oder einem Kunststoff, das bevorzugterweise die Stärke einer dünnen Metallfolie aufweist, wobei als Plättchen 120 auch eine dünne Metallfolie oder Kunststoffolie verwendet werden kann. Dieses Metallplättchen 120 besteht aus hochpoliertem Stahl oder einem anderen geeigneten Werkstoff. Besteht das Plättchen aus Kunststoff, dann findet bevorzugterweise eine reiß- und kratzfeste Kunststoffolie Verwendung.

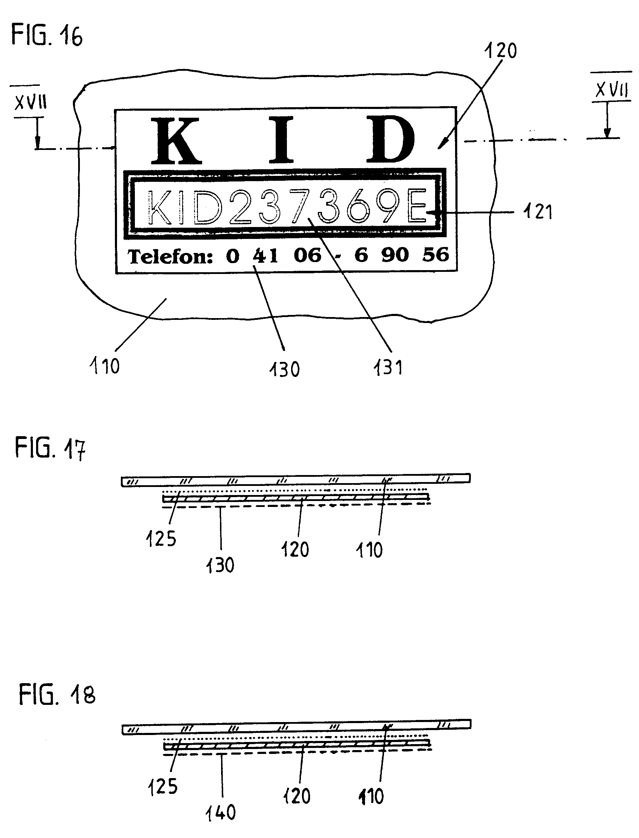

In das Plättchen 120, das aus einem quadratischen, rechteckförmigen oder eine andere geometrische Form aufweisenden Zuschnitt besteht, ist eine Code-Nummer bei 121 in Form einer Kombination aus Zahlen und/oder Buchstaben eingeschnitten, so daß die Code-Nummer als Durchbrechungen 122 vorliegt (Fig. 14 und 15).

Die Befestigung des Plättchens 120 auf der Glasscheibe 110 erfolgt mittels eines Haftklebers 125 der vorangehend beschriebenen Art, so daß das Plättchen 120 unlösbar mit der Glasscheibe 110 verbunden ist und nur unter Zerstörung oder Beschädigung der Glasscheibe 110 entfernt werden kann.

Der umlaufende Rand 120a des Plättchens 120 ist nach außen konisch sich verjüngend auslaufend, so daß im aufgeklebten Zustand das Plättchen 120 stufenlos in die Oberfläche der Glasscheibe 110 übergeht.

Neben der Code-Nummer kann das Plättchen 120 auch Hinweise auf das Vorliegen eines codierten Fahrzeuges enthalten.

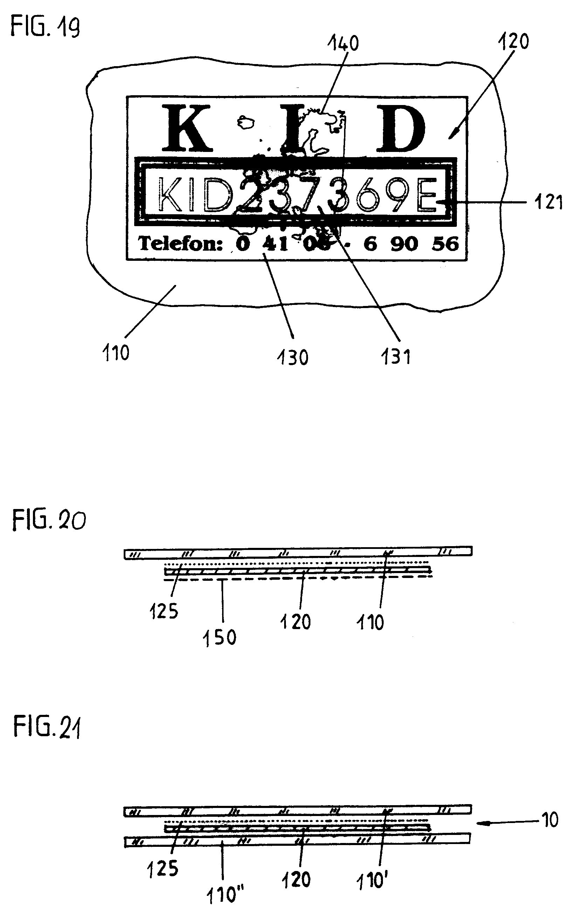

Das Plättchen 120 kann eine Farbbeschichtung 130 tragen, die mit einem farbfreien Fenster 131 mit einer rechteckförmigen, quadratischen oder mit einer anderen geometrischen Form versehen ist (Fig. 16 und 17). Bei dieser Ausgestaltung besteht das Plättchen 120 aus einer Klarsichtfolie. Des weiteren kann das Plättchen 120 mit einer Bildmotivbeschichtung 140 versehen sein (Fig. 18 und 19). Die Code-Nummer 121, die Farbbeschichtung 130 oder die Bildmotivbeschichtung 140 können auch aus einem holographischen Bild bestehen, das als Beschichtung 150 auf dem Plättchen 120 angebracht sein kann (Fig. 20).

Die Glasscheibe 110 kann auch doppelwandig ausgebildet sein. Zwischen den beiden einzelnen Glasscheiben 110', 110'' ist dann das Plättchen 120 angeordnet, das auf die Innenwandfläche einer der beiden Glasscheiben 110', 110'' aufgeklebt ist (Fig. 21). Das Plättchen 120 kann auch an der Innenwandfläche einer der beiden Glasscheiben 110', 110'' befestigt sein.

Die Code-Nummern 121, 122 in dem Plättchen 120 können in diesem auch als Durchbrechungen ausgebildet sein, so daß das Plättchen 120 als Schablone entsprechend der Schablone 10 gemäß Fig. 1 und 2 eingesetzt werden kann. Auf diese Weise bieten sich dem Kraftfahrzeugbesitzer mehrere Möglichkeiten, Code-Nummern an den Glasscheiben seines Fahrzeuges anzubringen, nämlich Aufkleben des Plättchens 120 auf die Fahrzeugscheibe, oder Verwendung des Plättchens 120 als Schablone zum Einätzen der Code-Nummern in die Glasscheibe mittels einer Ätzpaste oder Aufkleben des Plättchens 120 auf eine Glasscheibe und gleichzeitigem Einätzen der Code-Nummern mittels einer Ätzpaste in die Fahrzeugscheibe. Auch das Plättchen 120 kann wie die Schablone 10 an dem Beutel 16 befestigt sein.

## Patentansprüche

1. Trägerelement zum Anbringen eines Bild-, Buchstaben- und/oder Zahlen-Codes (13) in oder an einer Glasscheibe, zur Sicherheitscodierung von Kraftfahrzeugen, dadurch gekennzeichnet, daß das Trägerelement als Schablone (10) ausgebildet ist und vorgestanzte, vorgeritzte oder vorgeschnittene Durchbrechungen (13), vorzugsweise Buchstaben und/oder Zahlen, aufweist und auf ihrer Rückseite mit einer selbstklebenden Beschichtung (11) versehen ist, mit der die Schablone (10) lösbar auf einem temporären Träger (12') aus Papier, Pappe, Kunststoff oder Glas, als Schutzblatt (12) fixierbar ist.

2. Trägerelement nach Anspruch 1, dadurch gekennzeichnet, daß der Träger (12') ein die Rückseite der Schablone (10) vollständig abdeckendes Schutzblatt ist.

3. Trägerelement nach Anspruch 2, dadurch gekennzeichnet, daß die Schablone (10) und/oder das Schutzblatt (12) flexibel ist/sind.

4. Trägerelement nach einem der Ansprüche 1 bis 3, dadurch gekennzeichnet, daß das Schutzblatt (12) an mindestens einer Seite über den Schablonenrand hinausragt oder eine Abziehlasche (12a) aufweist.

5. Trägerelement nach einem der Ansprüche 1 bis 4, dadurch gekennzeichnet, daß die Durchbrechungen (13) aus geschlossenen Kurven und/oder Linien bestehen, die eine ebenfalls geschlossene Fläche (14) begrenzen.

6. Trägerelement nach Anspruch 5, dadurch gekennzeichnet, daß die Durchbrechungen (13) und die Flächen (14) derart vorbereitet sind, daß beim Abziehen der Schablone (10) vom Träger (12') die Flächen (14) auf dem Träger haften bleiben.

7. Trägerelement zum Anbringen eines Bild-, Buchstaben- und/oder Zahlen-Codes (13) in oder an einer Glasscheibe, zur Sicherheitscodierung von Kraftfahrzeugen, dadurch gekennzeichnet, daß das Trägerelement aus einem Code-Nummern (121) tragenden Plättchen (120) aus Metall oder Kunststoff besteht, das unter Ausbildung eines festen Haftfilmes hoher Stabilität gegenüber Abscher- und Zugkräften vermittels eines Klebstoffes (125), wie z.B. eines Kontakt- oder Reaktions-Klebers, auf einer Glasscheibe (110) befestigt ist.

8. Trägerelement nach Anspruch 7, dadurch gekennzeichnet, daß das Plättchen (120) aus hochpoliertem Stahl, oder einer reiß- und kratzfesten Kunststoffolie besteht.

9. Trägerelement nach einem der Ansprüche 7 und 8, dadurch gekennzeichnet, daß die Code-Nummer (121) in dem Plättchen (120) in Form von Durchbrechungen (122) angebracht ist.

10. Trägerelement nach einem der Ansprüche 7 bis 9, dadurch gekennzeichnet, daß der umlaufende Rand (120a) des Plättchens (120) sich nach außen konisch verjüngt und daß das Plättchen (120) im aufgeklebten Zustand stufenlos in die Oberfläche der Glasscheibe (120) übergeht.

11. Trägerelement nach einem der Ansprüche 7 bis 10, dadurch gekennzeichnet, daß das aus einer glasklaren Kunststoffolie bestehende Plättchen (120) eine Farbbeschichtung (130) trägt, die mit einem farbfreien, die Code-Nummer (121) tragenden Fenster (131) mit einer rechteckförmigen, quadratischen oder mit einer anderen geometrischen Form versehen ist.

12. Trägerelement nach einem der Ansprüche 7 bis 11, dadurch gekennzeichnet, daß das Plättchen (120) mit einer Bildmotivbeschichtung (140) versehen ist.

13. Trägerelement nach einem der Ansprüche 7 bis 12, dadurch gekennzeichnet, daß die Code-Nummer (121), die Farbbeschichtung (130) oder die Bildmotivbeschichtung (140) aus einem holographischen Bild (150) besteht.

14. Trägerelement nach einem der Ansprüche 7 bis 13, dadurch gekennzeichnet, daß die Glasscheibe (110) doppelwandig ausgebildet und aus zwei einzelnen Glasscheiben (110', 110'') besteht, zwischen denen das Plättchen (120) angeordnet ist.

15. Trägerelement nach einem der Ansprüche 7 bis 13, dadurch gekennzeichnet, daß die Glasscheibe (110) doppelwandig ausgebildet und aus zwei einzelnen Glasscheiben (110', 110'') besteht und daß das Plättchen (120) an der Innenwandfläche einer der beiden Glasscheiben (110', 110'') angeordnet ist.

16. Trägerelement nach einem der Ansprüche 1 bis 15, dadurch gekennzeichnet, daß das Trägerelement, wie Schablone (10) oder Plättchen (120) in dem Verschlußstreifen (15) eines Beutels (16) angeordnet ist.

17. Trägerelement nach einem der Ansprüche 1 bis 15, dadurch gekennzeichnet, daß das Trägerelement, wie Schablone (10) oder Plättchen (120) fest oder lösbar an einem Beutel (16) befestigt ist.

18. Trägerelement nach Anspruch 17, dadurch gekennzeichnet, daß der Beutel (16) Kalk enthält.

19. Trägerelement nach einem der Ansprüche 1 bis 18, dadurch gekennzeichnet, daß es in einem Karton (18) verpackt ist, auf dessen eine Wandung (182) eine Glasplatte (19) geklebt ist.

20. Trägerelement nach Anspruch 19, dadurch gekennzeichnet, daß der Karton (18) oder Beutel (16) Kunststoffhandschuhe und eine Flasche oder Dose mit Ätzflüssigkeit oder -paste beinhaltet.

21. Trägerelement nach Anspruch 19 oder 20, dadurch gekennzeichnet, daß zusätzlich ein oder zwei Spachtel, mindestens ein Reinigungs- und Trockentuch, ein Wachsentferner, eine Entsorgungstüte, die vorzugsweise mit Kalk gefüllt ist, und eine Ausweishülle im Karton (18) enthalten sind.

22. Trägerelement nach einem der Ansprüche 19 bis 21, dadurch gekennzeichnet, daß sie zusammen mit der Flasche oder Dose, den Handschuhen, den Tüchern, der Entsorgungstüte und/oder dem Wachsentferner in Fächern oder Halterungen einer Verpackung (18) gelagert ist.

23. Trägerelement nach einem der Ansprüche 16, 18, 20 bis 22, dadurch gekennzeichnet, daß das Trägerelement, wie Schablone (10), oder Plättchen (120) fest oder lösbar an dem oberen, aus dem Beutel (16) herausgeführten Randabschnitt eines im Innenraum des Beutels (16) angeordneten Zuschnitts (20) aus Pappe, Karton oder einer Kunststoffolie befestigt ist, wobei der Zuschnitt (20) den Innenraum des Beutels (16) in zwei Kammern (16', 16'') unterteilt.

24. Trägerelement nach einem der Ansprüche 16, 18, 20 bis 22, dadurch gekennzeichnet, daß der Innenraum des Beutels (16) mittels einer zerstörbaren oder heraustrennbaren Trennwand aus Folie, Papier, Karton od.dgl. in eine obere Kammer (16'b) und in eine untere Kammer (16''b) unterteilt ist, in der der Ätzpastenrestentsorgungskalk angeordnet ist.
